# EUROPEAN PATENT SPECIFICATION

(11) **EP 4 166 268 B1**
(45) Date of publication and mention of the grant of the patent: **15.04.2026**
(21) Application number: 21858575.0
(22) Date of filing: 18.08.2021
(51) Int. Cl.: B23K 26/12, B23K 26/32, B23K 26/26, B23K 26/244, B23K 26/20, H01M 50/60, H01M 50/169, H01M 50/159, H01M 50/119, H01M 50/103, B23K 26/24, B23K 37/04, H01M 10/058, B23K 101/04, B23K 101/18, B23K 101/36, B23K 103/04

(54) **WELDING APPARATUS FOR MANUFACTURING SECONDARY BATTERY, AND WELDING METHOD USING SAME**
SCHWEISSVORRICHTUNG ZUR HERSTELLUNG EINER SEKUNDÄRBATTERIE UND SCHWEISSVERFAHREN DAMIT
APPAREIL DE SOUDAGE POUR LA FABRICATION D'UNE BATTERIE SECONDAIRE, ET PROCÉDÉ DE SOUDAGE L'UTILISANT

(30) Priority: 18.08.2020 KR 20200103053
(43) Date of publication of application: 19.04.2023
(73) Proprietor: LG Energy Solution, Ltd., Seoul 07335 (KR)
(72) Inventor: LEE, Jin Yeong, Daejeon 34122 (KR); LEE, Jin Soo, Daejeon 34122 (KR); SON, Bu Won, Daejeon 34122 (KR); JUNG, Yeong Hun, Daejeon 34122 (KR); LEE, Yong Gon, Daejeon 34122 (KR); PARK, Jeong Ho, Daejeon 34122 (KR); PARK, Geun Young, Daejeon 34122 (KR)
(74) Representative: Goddar, Heinz J.
(86) International application number: PCT/KR2021/010942
(87) International publication number: WO 2022/039488

(56) References cited:
- WO-A1-2009/151007
- WO-A2-2012/165767
- CN-A- 108 515 263
- JP-A- 2013 041 752
- JP-A- 2020 520 887
- KR-A- 20120 065 636
- KR-A- 20180 074 966
- KR-B1- 101 864 923
- US-A1- 2017 077 543
- US-B2- 9 379 409

## Description

### [Technical Field]

This application claims priority to and the benefit of Korean Patent Application No. 10-2020-0103053 filed with the Korean Intellectual Property Office on August 18, 2020.

The present invention relates to a welding apparatus for manufacturing a secondary battery and a welding method using the same, which are capable of preventing deformation of a product due to a pressure applied in all directions or non-uniform welding due to non-uniform pressing to a cover during a process of sealing and fixing the cover to an opening of a main body casing at the time of manufacturing a secondary battery.

### [Background Art]

In general, secondary batteries are widely used as power sources for mobile devices such as mobile phones and notebook computers. In particular, a lithium secondary battery is advantageous in that the lithium secondary battery has a high operating voltage and a high energy density for unit weight. Therefore, the demand for the lithium secondary battery gradually increases.

The lithium secondary battery mainly uses lithium-based oxide as a positive electrode active material and a carbon material as a negative electrode active material. Specifically, the secondary batteries are sometimes classified into lithium-ion batteries, lithium-ion polymer batteries, and lithium polymer batteries depending on types of used electrolytes or sometimes classified into cylindrical, angular, and pouch-type batteries depending on external shapes of the batteries.

Recently, the angular battery and the pouch-type battery, which has a width smaller than a length, particularly attract attention in accordance with the miniaturization of the mobile devices. The secondary battery has a plurality of battery cells connected in series or parallel to cope with an increase in required output.

US 2012/0070723 A1 relates to a sealed secondary battery and a manufacturing apparatus and a manufacturing method therefor.

JP 2020 520887 A relates to forming a hermetically sealed cavity.

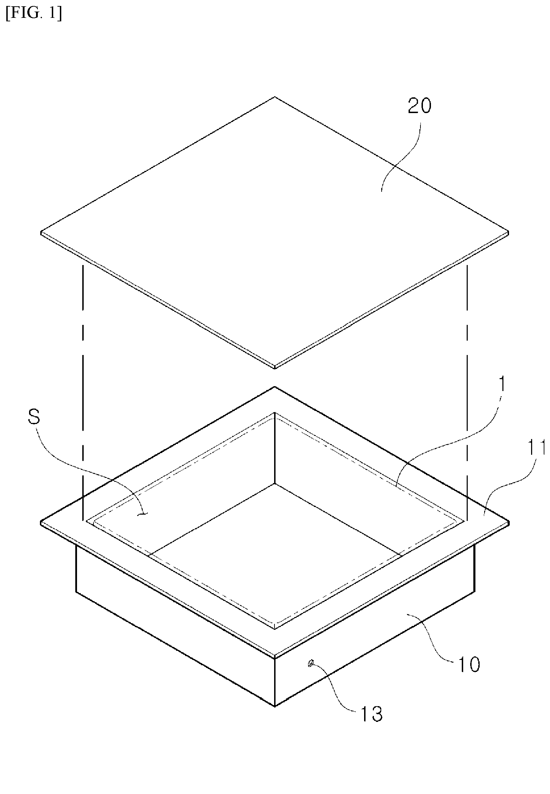

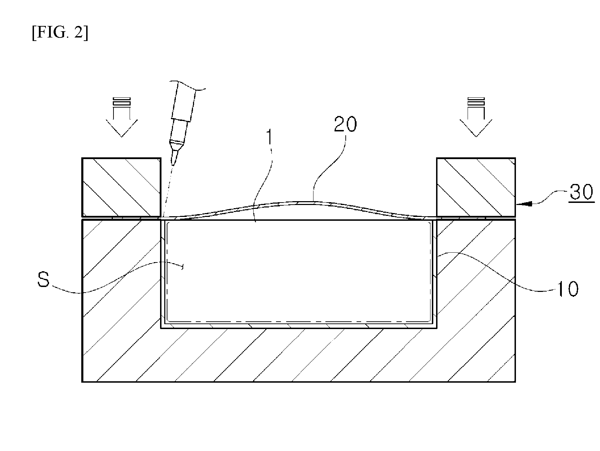

Referring to FIGS. 1 and 2, the battery cell of the angular battery, among the secondary batteries, has an angular main body casing 10 having an accommodation space S that accommodates an electrode assembly 1 including a positive electrode, a negative electrode, and a separator.

Further, a cover 20 is mounted at an upper end of the main body casing 10 by laser welding or the like, and then an electrolyte is injected into the accommodation space S through a liquid injection port 13 provided at one side of the main body casing 10.

Thereafter, the liquid injection port 13 is sealed by a metallic ball or the like, which makes it possible to prevent the electrolyte from leaking to the outside of the main body casing 10.

However, because a thin stainless-steel plate is mainly used for the main body casing 10 and the cover 20, there is concern that a product is deformed when the cover 20 is pressed and fixed to an upper portion of the main body casing 10 by a jig 30 (see FIG. 2) for laser welding on the thin plate.

That is, a center of the cover 20 sometimes swells upward because of a pressure applied in all directions when the cover 20 is pressed and fixed by the jig 30, which causes deformation of a product.

**In** this case, a separate push structure for pushing a central portion of the cover 20 downward may be applied to prevent the swelling of the cover 20. However, the push structure applied may interfere with a welding unit that performs the welding while moving along a closed curve defined along a rim of the cover 20.

In addition, there is a problem in that non-uniform welding occurs because of non-uniform pressing at the time of fixing a position of the cover 20 for welding.

### [Disclosure]

### [Technical Problem]

The present invention has been made in an effort to solve the above-mentioned problems, and an object of the present invention is to provide a welding apparatus for manufacturing a secondary battery and a welding method using the same, which are capable of preventing deformation of a product due to a pressure applied in all directions or non-uniform welding due to non-uniform pressing to a cover during a process of sealing and fixing the cover to an opening of a main body casing at the time of manufacturing a secondary battery.

### [Technical Solution]

To achieve the above-mentioned object, a welding apparatus for manufacturing a secondary battery according to the present invention, which welds a main body casing having an accommodation space having an opening formed at an upper side thereof and a cover configured to close the opening, includes: a lower jig on which the main body casing is positioned; an upper jig configured to engage with the lower jig and press and fix the cover to the main body casing; a vacuum generating unit configured to form a negative pressure in an accommodation space defined by the main body casing and the cover; and a welding unit configured to weld and seal the main body casing and the cover.

In this case, a seating groove is provided in the lower jig so that the main body casing is seated in the seating groove, and the upper jig presses and fixes downward a rim of the cover placed on an upper surface of the lower jig to close and seal the opening of the main body casing.

In addition, a flange portion is formed around a rim of the opening of the main body casing, and the flange portion is disposed on and caught by the upper surface of the lower jig where the lower jig is in contact with the upper jig.

In addition, the upper jig may be installed to be movable upward and downward by an actuator.

In addition, a vacuum hole is formed in the lower jig and communicates with an electrolyte injection port provided at one side of the main body casing, and the vacuum generating unit forms the negative pressure in the accommodation space, defined by the main body casing and the cover, through the vacuum hole.

In addition, the welding apparatus may further include a gasket interposed between the vacuum hole and the electrolyte injection port and configured to keep the vacuum hole and the electrolyte injection port sealed.

In addition, the welding unit may close the opening and fix the cover by performing welding along the rim of the cover which is in contact with the rim of the opening of the main body casing.

In addition, the welding unit may be configured as a laser welding unit.

A welding method for manufacturing a secondary battery, which uses the welding apparatus for manufacturing a secondary battery, includes: disposing the main body casing accommodating an electrode assembly in a seating groove of the lower jig; disposing the cover on an upper surface of the lower jig to close and seal the opening of the main body casing; moving the upper jig downward to press and fix a rim of the cover to a flange portion formed around a rim of the opening of the main body casing; forming, by the vacuum generating unit, a negative pressure in the accommodation space in the main body casing to prevent the cover from swelling; and performing, by the welding unit, welding along the rim of the cover to close the opening and fix the co ver.

### [Advantageous Effects]

The welding apparatus for manufacturing a secondary battery and the welding method using the same according to the present invention configured as described above may press the entire cover with the uniform pressure by forming, through the vacuum generating unit, the negative pressure in the accommodation space in the main body casing, which accommodates the electrode assembly, during the process of welding and fixing the cover to the opening of the main body casing at the time of manufacturing the secondary battery. Therefore, the welding apparatus and welding method may prevent the deformation of a product due to the pressure applied in all directions or the non-uniform welding due to the non-uniform pressing to the cover.

### [Description of Drawings]

FIG. 1 is an exploded perspective view illustrating an assembly structure of a general secondary battery.
FIG. 2 is a schematic cross-sectional side view illustrating a welding apparatus for manufacturing a secondary battery in the related art.
FIG. 3 is a schematic cross-sectional side view illustrating a welding apparatus for manufacturing a secondary battery according to the present invention.
FIG. 4 is a detailed view of part 'A' in FIG. 3.
FIGS. 5a to 5c are views illustrating a welding process using the welding apparatus for manufacturing a secondary battery according to the present invention.
FIG. 6 is a view illustrating a result of performing welding by using the welding apparatus for manufacturing a secondary battery in the related art.
FIG. 7 is a view illustrating a result of performing welding by using the welding apparatus for manufacturing a secondary battery according to the present invention.

### [Description of Main Reference Numerals of Drawings]

1: Electrode assembly
10: Main body casing
S: Accommodation space
11: Flange portion
13: Electrolyte injection port
20: Cover
100: Welding apparatus
110: Lower jig
111: Seating groove
113: Vacuum hole
120: Upper jig
130: Vacuum generating unit
131: Vacuum pump
140: Welding unit

### [Mode for Invention]

Hereinafter, configurations and operations of specific embodiments of the present invention will be described in detail with reference to the accompanying drawings.

In giving reference numerals to constituent elements of the respective drawings, it should be noted that the same constituent elements will be designated by the same reference numerals, if possible, even though the constituent elements are illustrated in different drawings.

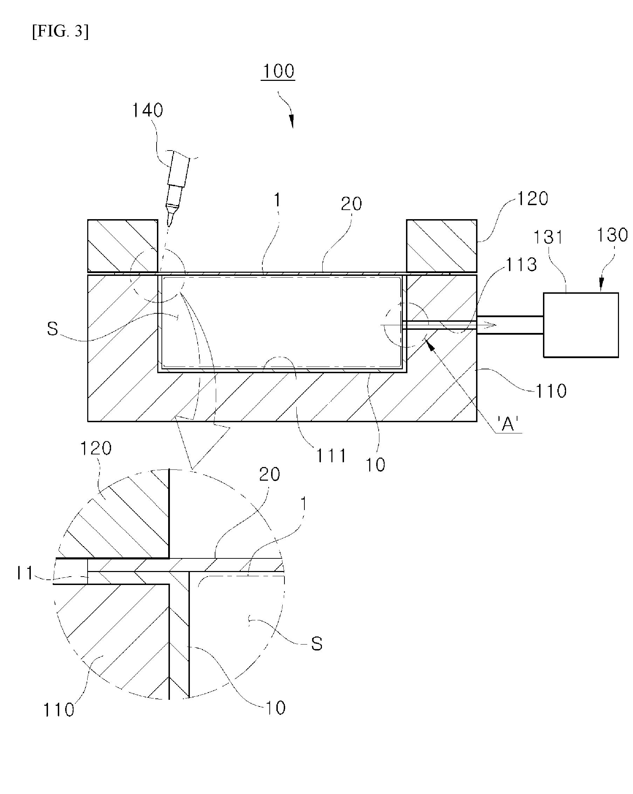

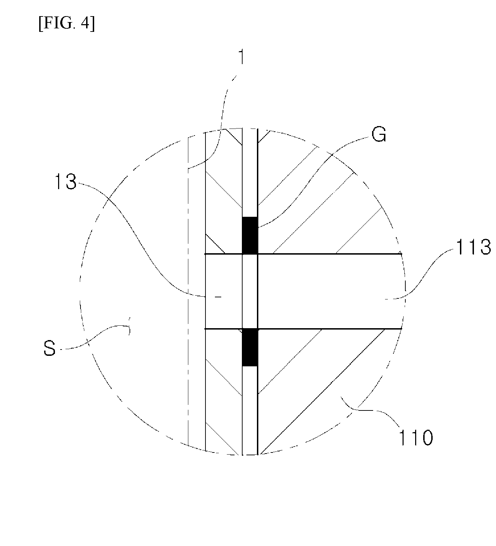

FIG. 3 is a schematic cross-sectional side view illustrating a welding apparatus for manufacturing a secondary battery according to the present invention, and FIG. 4 is a detailed view of part 'A' in FIG. 3.

Referring to FIGS. 3 and 4, the present invention serves to weld a main body casing 10 having an accommodation space S having an opening formed at an upper side thereof and a cover 20 for covering the opening. A welding apparatus 100 for manufacturing a secondary battery according to an exemplary embodiment of the present invention includes a lower jig 110, an upper jig 120, a vacuum generating unit 130, and a welding unit 140.

The configuration of the present invention will be specifically described below.

For reference, in the present invention, an example will be illustrated and described in which the main body casing 10 and the cover 20, which are welding targets, have an angular shape such as a tetrahedron. Further, an electrolyte injection port 13 is provided at one side of the main body casing 10 so that an electrolyte may be injected into the accommodation space.

First, the lower jig 110 defines a main body of the welding apparatus 100 and has a seating groove 111 on which the main body casing 10, which is the welding target, may be seated. The seating groove 111 may have a shape and size corresponding to those of the main body casing 10.

A vacuum hole 113 is penetratively formed at one side of the lower jig 110 so that the electrolyte injection port 13 of the main body casing 10 is connected to the vacuum generating unit 130 to be described below.

Meanwhile, a flange portion 11 is formed around an opening rim of the main body casing 10. Therefore, the flange portion 11 may be seated by being disposed on and caught by an upper surface of the lower jig 110 where the lower jig 110 and the upper jig 120 to be described below are in contact with each other when the main body casing 10 is seated.

The upper jig 120 is installed above the lower jig 110 and may be moved upward or downward by an actuator (not illustrated). The upper jig 120 presses and fixes downward the rim of the cover 20 placed on the upper surface of the lower jig 110 to close and seal the opening of the main body casing 10.

The vacuum generating unit 130 forms a negative pressure in the accommodation space S of the main body casing 10 to prevent the cover 20 placed on an upper portion of the main body casing 10 from swelling.

Specifically, the vacuum hole 113 is formed at one side of the lower jig 110 and communicates with the electrolyte injection port 13 of the main body casing 10. The vacuum generating unit 130 may include a vacuum pump 131 that generates a vacuum in the accommodation space S of the main body casing 10 through the vacuum hole 113. Therefore, the negative pressure may be formed in the accommodation space S.

In this case, a gasket G (see FIG. 4) may be interposed between the vacuum hole 113 and the electrolyte injection port 13 and keep the vacuum hole 113 and the electrolyte injection port 13 sealed. In particular, the gasket G may be integrated with an inner peripheral surface of the seating groove 111 of the lower jig 110.

The welding unit 140 performs the welding along the rim of the cover 20 being in contact with the opening rim of the main body casing 10, thereby closing the opening of the main body casing 10 and fixing the cover 20. The welding unit 140 may use laser welding. In particular, the laser welding may be performed on a metallic material to ensure processing precision. Of course, the present invention is not limited thereto and may be applied to various materials including metal, and various welding methods may be applied as long as the welding methods may easily weld and fix the main body casing 10 and the cover 20.

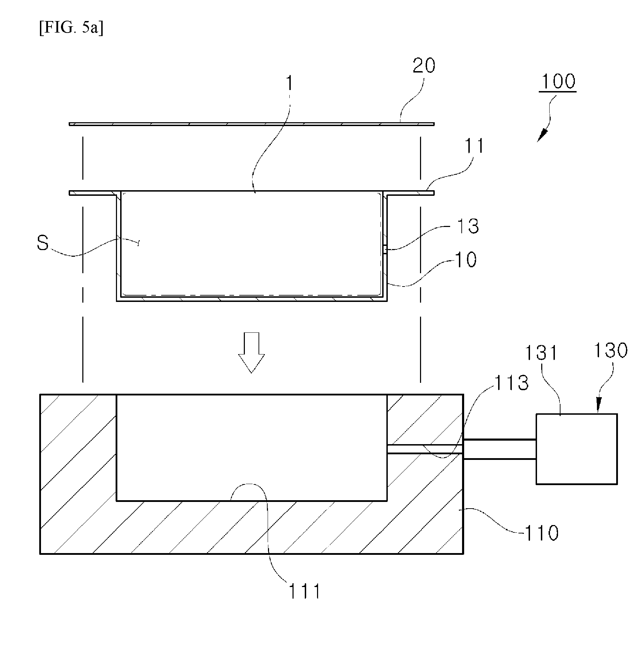

Then, a welding process using the welding apparatus 100 for manufacturing a secondary battery according to the present invention configured as described above will be described with reference to FIGS. 5a to 5c.

Referring to FIG. 5a, the main body casing 10 accommodating an electrode assembly 1 is disposed in the seating groove 111 of the lower jig 110. The main body casing 10 is disposed such that the flange portion 11 provided around the opening rim of the main boding casing 10 is in contact with the upper surface of the lower jig 110. In this case, in the present invention, the example has been described in which the electrode assembly 1 is accommodated in the main body casing 10 first, and then the main body casing 10 is disposed in the seating groove of the lower jig 110. However, the present invention is not limited thereto, and the main body casing 10 may be seated on the lower jig 110 first, and then the electrode assembly 1 may be accommodated in the accommodation space S.

Thereafter, the cover 20 is disposed on the upper surface of the lower jig 110 to close and seal the opening of the main body casing 10 in which the electrode assembly 1 is accommodated. That is, the cover 20 is disposed to be in contact with the flange portion 11 of the main body casing 10.

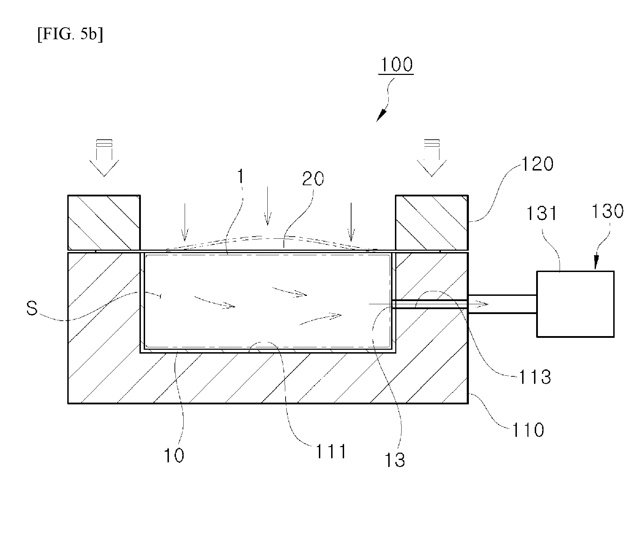

Then, as illustrated in FIG. 5b, the upper jig 120 is moved downward to press and fix the rim of the cover 20 to the flange portion 11 of the main body casing 10.

When the rim of the cover 20 is in contact with the flange portion 11 of the main body casing 10 by the upper jig 120, the vacuum generating unit 130 forms the negative pressure in the accommodation space S of the main body casing 10. Therefore, the vacuum generating unit 130 may prevent the cover 20 from swelling because of a pressure applied in all directions by the upper jig 120.

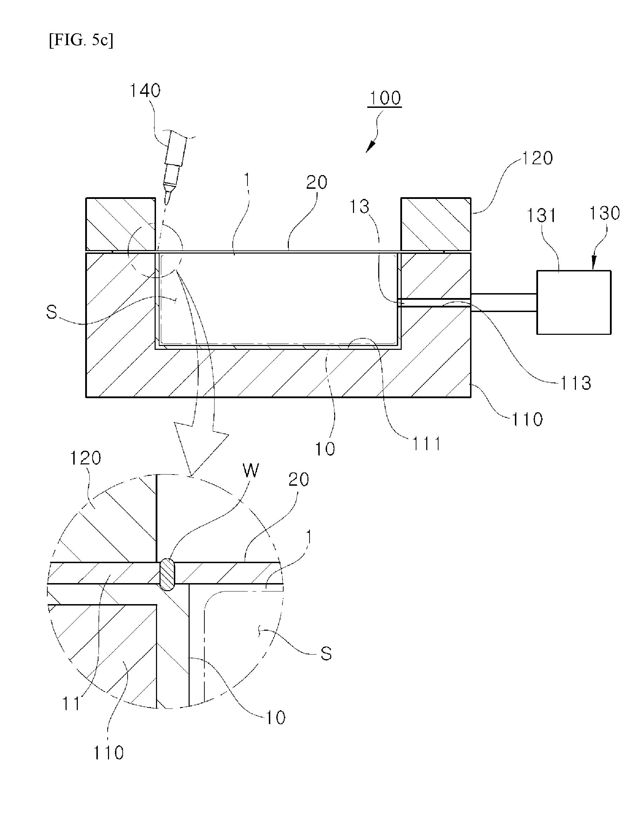

In this state, as illustrated in FIG. 5c, the welding unit 140 performs laser welding W along the rim of the cover 20 and close and fix the opening of the main body casing 10.

When the cover 20 is sealed and fixed to the opening of the main body casing 10 by the welding W, the product is withdrawn from the lower jig 110, and then the electrolyte is injected into the accommodation space S in the main body casing 10 through the electrolyte injection port 13 (not illustrated). Thereafter, the electrolyte injection port 13 is sealed by a metallic ball (not illustrated) or the like, which makes it possible to prevent the electrolyte from leaking to the outside of the main body casing 10.

The welding apparatus for manufacturing a secondary battery and the welding method using the same according to the present invention described above forms, through the vacuum generating unit 130, the negative pressure in the accommodation space S in the main body casing 10, which accommodates the electrode assembly 1, at the time of welding and fixing the main body casing 10 and the cover 20 for manufacturing a secondary battery. Therefore, the welding apparatus and welding method may prevent non-uniform welding due to non-uniform pressing or deformation of a welded product due to swelling of the cover caused by a pressure applied in all directions and generated during a process of sealing and fixing the cover 20 to the opening of the main body casing 10. Further, it is possible to ensure processing precision by adjusting a magnitude of the negative pressure generated by the vacuum generating unit 130 depending on materials of the main body casing 10 and the cover 20.

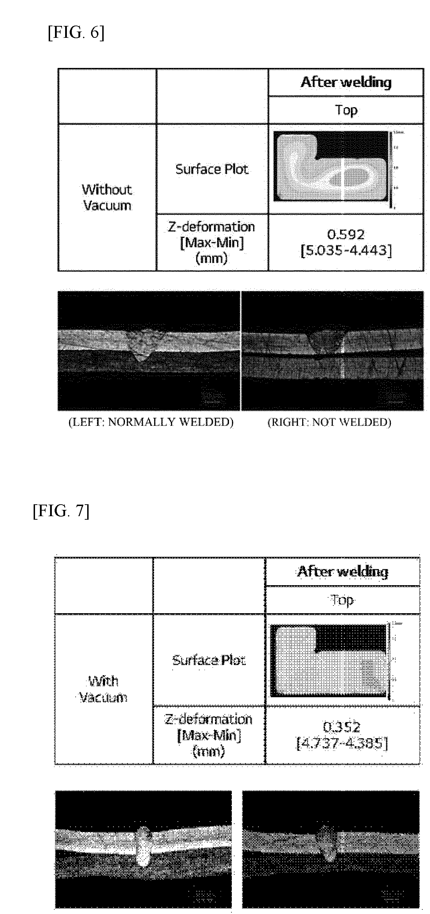

Specifically, as illustrated in FIG. 6, in the case of a welding apparatus in the related art, a central portion of the cover 20 may be swelled and deformed after welding because of a pressure applied in all directions generated at the time of pressing and fixing the cover 20. **In** addition, non-uniform welding may occur because of non-uniform pressing at the time of fixing the cover 20 for welding.

**In** contrast, according to the present invention, as illustrated in FIG. 7, the vacuum generating unit 130 forms the negative pressure in the main body casing 10, thereby preventing deformation such as swelling of the cover 20. Therefore, it can be ascertained that the uniform welding may be performed on the product without a position deviation.

## Claims

1. A welding apparatus (100) for manufacturing a secondary battery, which welds a main body casing (10) having an accommodation space (S) having an opening formed at an upper side thereof and a cover (20) configured to close the opening, the welding apparatus (100) comprising:
a lower jig (110) on which the main body casing (10) is positioned;
an upper jig (120) configured to engage with the lower jig (110) and press and fix the cover (20) to the main body casing (10);
a vacuum generating unit (130) configured to form a negative pressure in an accommodation space (S) defined by the main body casing (10) and the cover (20), wherein a vacuum hole (113) is formed in the lower jig (110) and communicates with an electrolyte injection port (13) provided at one side of the main body casing (10), and the vacuum generating unit (130) forms the negative pressure in the accommodation space (S), defined by the main body casing (10) and the cover (20), through the vacuum hole (113); and
a welding unit (140) configured to weld and seal the main body casing (10) and the cover (20),
wherein a seating groove (111) is provided in the lower jig (110) so that the main body casing (10) is seated in the seating groove (111), and
wherein the upper jig (120) presses and fixes downward a rim of the cover (20) placed on an upper surface of the lower jig (110) to close and seal the opening of the main body casing (10), and
wherein a flange portion (11) is formed around a rim of the opening of the main body casing (10), and the flange portion (11) is disposed on and caught by an upper surface of the lower jig (110) where the lower jig (110) is in contact with the upper jig (120), and wherein the welding unit (140) closes the opening and fixes the cover (20) by performing welding along a rim of the cover (20) which is in contact with a rim of the opening of the main body casing (10).

2. The welding apparatus (100) of claim 1, wherein the upper jig (120) is installed to be movable upward and downward by an actuator.

3. The welding apparatus (100) of claim 1, further comprising:
a gasket (G) interposed between the vacuum hole (113) and the electrolyte injection port (13) and configured to keep the vacuum hole (113) and the electrolyte injection port (13) sealed.

4. The welding apparatus (100) of claim 1, wherein the welding unit (140) is configured as a laser welding unit.

5. A welding method for manufacturing a secondary battery, which uses the welding apparatus (100) for manufacturing a secondary battery according to any one of claims 1 to 4, the welding method comprising:
disposing the main body casing (10) accommodating an electrode assembly (1) in a seating groove (111) of the lower jig (110);
disposing the cover (20) on an upper surface of the lower jig (110) to close and seal the opening of the main body casing (10);
moving the upper jig (120) downward to press and fix a rim of the cover (20) to a flange portion (11) formed around a rim of the opening of the main body casing (10);
forming, by the vacuum generating unit (130), a negative pressure in the accommodation space (S) in the main body casing (10) to prevent the cover (20) from swelling, wherein a vacuum hole (113) formed in the lower jig (110) communicates with an electrolyte injection port (13) provided at one side of the main body casing (10), and the vacuum generating unit (130) forms the negative pressure in the accommodation space (S), defined by the main body casing (10) and the cover (20), through the vacuum hole (113); and
performing, by the welding unit (140), welding along the rim of the cover (20) to close the opening and fix the cover (20).

## Patentansprüche

1. Schweißvorrichtung (100) zur Herstellung einer Sekundärbatterie, die ein Hauptkörpergehäuse (10) schweißt, das einen Aufnahmeraum (S) mit einer an seiner Oberseite ausgebildeten Öffnung und eine Abdeckung (20) aufweist, die dazu ausgelegt ist, die Öffnung zu verschließen, wobei die Schweißvorrichtung (100) umfasst:
eine untere Spannvorrichtung (110), auf der das Hauptkörpergehäuse (10) positioniert ist;
eine obere Spannvorrichtung (120), die dazu ausgelegt ist, in die untere Spannvorrichtung (110) einzugreifen und die Abdeckung (20) an das Hauptkörpergehäuse (10) zu drücken und zu befestigen;
eine Vakuumerzeugungseinheit (130), die dazu ausgelegt ist, einen Unterdruck in einem Aufnahmeraum (S) zu erzeugen, der durch das Hauptkörpergehäuse (10) und die Abdeckung (20) definiert ist, wobei eine Vakuumöffnung (113) in der unteren Spannvorrichtung (110) ausgebildet ist und mit einer Elektrolyteinspritzöffnung (13) in Verbindung steht, die an einer Seite des Hauptkörpergehäuses (10) vorgesehen ist, und die Vakuumerzeugungseinheit (130) den Unterdruck in dem Aufnahmeraum (S), der durch das Hauptkörpergehäuse (10) und die Abdeckung (20) definiert ist, durch die Vakuumöffnung (113) erzeugt; und
eine Schweißeinheit (140), die dazu ausgelegt ist, das Hauptkörpergehäuse (10) und die Abdeckung (20) zu verschweißen und abzudichten,
wobei eine Aufnahmenut (111) in der unteren Spannvorrichtung (110) vorgesehen ist, so dass das Hauptkörpergehäuse (10) in der Aufnahmenut (111) sitzt, und
wobei die obere Spannvorrichtung (120) einen Rand der Abdeckung (20), der auf einer oberen Fläche der unteren Spannvorrichtung (110) angeordnet ist, nach unten drückt und fixiert, um die Öffnung des Hauptkörpergehäuses (10) zu schließen und abzudichten, und
wobei ein Flanschabschnitt (11) um einen Rand der Öffnung des Hauptkörpergehäuses (10) herum ausgebildet ist und der Flanschabschnitt (11) auf einer oberen Fläche der unteren Spannvorrichtung (110) angeordnet ist und von dieser erfasst wird, wo die untere Spannvorrichtung (110) in Kontakt mit der oberen Spannvorrichtung (120) steht, und wobei die Schweißeinheit (140) die Öffnung verschließt und die Abdeckung (20) fixiert, indem sie eine Schweißung entlang eines Randes der Abdeckung (20) durchführt, der in Kontakt mit einem Rand der Öffnung des Hauptkörpergehäuses (10) steht.

2. Schweißvorrichtung (100) nach Anspruch 1, wobei die obere Spannvorrichtung (120) so installiert ist, dass sie durch einen Aktuator auf und ab beweglich ist.

3. Schweißvorrichtung (100) nach Anspruch 1, ferner umfassend:
eine Dichtung (G), die zwischen der Vakuumöffnung (113) und der Elektrolyteinspritzöffnung (13) angeordnet und dazu ausgelegt ist, die Vakuumöffnung (113) und die Elektrolyteinspritzöffnung (13) abgedichtet zu halten.

4. Schweißvorrichtung (100) nach Anspruch 1, wobei die Schweißeinheit (140) als eine Laserschweißeinheit ausgebildet ist.

5. Schweißverfahren zur Herstellung einer Sekundärbatterie, das die Schweißvorrichtung (100) zur Herstellung einer Sekundärbatterie nach einem der Ansprüche 1 bis 4 verwendet, wobei das Schweißverfahren umfasst:
Anordnen des Hauptkörpergehäuses (10), das eine Elektrodenanordnung (1) aufnimmt, in einer Aufnahmenut (111) der unteren Spannvorrichtung (110);
Anordnen der Abdeckung (20) auf einer oberen Fläche der unteren Spannvorrichtung (110), um die Öffnung des Hauptkörpergehäuses (10) zu schließen und abzudichten;
Bewegen der oberen Spannvorrichtung (120) nach unten, um einen Rand der Abdeckung (20) an einen Flanschabschnitt (11) zu drücken und zu befestigen, der um einen Rand der Öffnung des Hauptkörpergehäuses (10) herum ausgebildet ist;
Ausbilden eines Unterdrucks in dem Aufnahmeraum (S) in dem Hauptkörpergehäuse (10) durch die Vakuumerzeugungseinheit (130), um zu verhindern, dass die Abdeckung (20) aufquillt, wobei eine in der unteren Spannvorrichtung (110) ausgebildete Vakuumöffnung (113) mit einer Elektrolyteinspritzöffnung (13) in Verbindung steht, die an einer Seite des Hauptkörpergehäuses (10) vorgesehen ist, und die Vakuumerzeugungseinheit (130) den Unterdruck in dem Aufnahmeraum (S), der durch das Hauptkörpergehäuse (10) und die Abdeckung (20) definiert ist, durch die Vakuumöffnung (113) erzeugt; und
Durchführen einer Schweißung entlang des Randes der Abdeckung (20) durch die Schweißeinheit (140), um die Öffnung zu schließen und die Abdeckung (20) zu befestigen.

## Revendications

1. Appareil de soudage (100) pour la fabrication d'une batterie secondaire, effectuant le soudage d'un carter de corps principal (10) possédant un espace de logement (S) doté d'une ouverture formée sur un côté supérieur de celui-ci, et un couvercle (20) configuré pour fermer l'ouverture, l'appareil de soudage (100) comprenant :
une monture inférieure (110) sur laquelle est positionné le carter de corps principal (10) ;
une monture supérieure (120) configurée pour s'engager avec la monture inférieure (110), et appuyer sur le couvercle (20) en le fixant sur le carter de corps principal (10) ;
un dispositif générateur de vide (130) configuré pour former une pression négative dans un espace de logement (S) défini par le carter de corps principal (10) et le couvercle (20), un trou de vide (113) étant formé dans la monture inférieure (110) et communiquant avec un orifice d'injection d'électrolyte (13) pratiqué sur un côté du carter de corps principal (10), et le dispositif générateur de vide (130) formant la pression négative dans l'espace de logement (S), défini par le carter de corps principal (10) et le couvercle (20), à travers le trou de vide (113) ; et
un appareil de soudage (140) configuré pour souder et sceller le carter de corps principal (10) et le couvercle (20),
une cannelure d'assise (111) étant pratiquée dans la monture inférieure (110) de sorte que le carter de corps principal (10) soit posé dans la cannelure d'assise (111), et
la monture supérieure (120) faisant pression vers le bas sur un pourtour du couvercle (20) placé sur une surface supérieure de la monture inférieure (110), en le fixant, afin de fermer et de sceller l'ouverture du carter de corps principal (10), et
une partie de bride (11) étant formée autour d'un pourtour de l'ouverture du carter de corps principal (10), et la partie de bride (11) étant disposée sur une surface supérieure de la monture inférieure (110) où la monture inférieure (110) se trouve au contact de la monture supérieure (120), et retenue par celle-ci, et l'appareil de soudage (140) fermant l'ouverture et fixant le couvercle (20) en effectuant une soudure le long d'un pourtour du couvercle (20) qui se trouve au contact d'un pourtour de l'ouverture du carter de corps principal (10).

2. Appareil de soudage (100) selon la revendication 1, la monture supérieure (120) étant installée de façon à pouvoir être déplacée en haut et en bas par un actionneur.

3. Appareil de soudage (100) selon la revendication 1, comprenant en outre :
une garniture d'étanchéité (G) intercalée entre le trou de vide (113) et l'orifice d'injection d'électrolyte (13), et configurée pour maintenir l'étanchéité du trou de vide (113) et de l'orifice d'injection d'électrolyte (13).

4. Appareil de soudage (100) selon la revendication 1, l'appareil de soudage (140) étant configuré comme un appareil de soudage au laser.

5. Procédé de soudage pour la fabrication d'une batterie secondaire faisant usage de l'appareil de soudage (100) pour la fabrication d'une batterie secondaire selon une quelconque des revendications 1 à 4, le procédé de soudage comprenant :
la disposition du carter de corps principal (10) contenant l'ensemble d'électrode (1) dans une cannelure d'assise (111) de la monture inférieure (110) ;
la disposition du couvercle (20) sur une surface supérieure de la monture inférieure (110) pour fermer et sceller l'ouverture du carter de corps principal (10) ;
le déplacement de la monture supérieure (120) vers le bas pour appuyer sur un pourtour du couvercle (20) et le fixer sur une partie de bride (11) formée autour d'un pourtour de l'ouverture du carter de corps principal (10) ;
la formation, par le dispositif générateur de vide (130), d'une pression négative dans l'espace de logement (S) dans le carter de corps principal (10) pour empêcher le gonflement du couvercle (20), un trou de vide (113), pratiqué dans la monture inférieure (110), communiquant avec un orifice d'injection d'électrolyte (13) pratiqué sur un côté du carter de corps principal (10), et le dispositif générateur de vide (130) formant la pression négative dans l'espace de logement (S), défini par le carter de corps principal (10) et le couvercle (20), à travers le trou de vide (113) ; et
l'exécution, par l'appareil de soudage (140), d'une soudure le long du pourtour du couvercle (20) pour fermer l'ouverture et fixer le couvercle (20).
